# EUROPÄISCHE PATENTANMELDUNG

(11) **EP 3 018 002 A1**
(43) Veröffentlichungstag der Anmeldung: **11.05.2016**
(21) Anmeldenummer: 14192449.8
(22) Anmeldetag: 10.11.2014
(51) Int. Cl.: B60P 7/08, B25B 25/00

(54) **Einrichtung zum Schließen von Spanngurten**

(71) Anmelder: Lindow, Skadi, 18211 Ostseebad Nienhagen (DE)
(72) Erfinder: Lindow, Skadi, 18211 Ostseebad Nienhagen (DE)
(74) Vertreter: Limbeck, Achim

(57) **Zusammenfassung**

Die vorliegende Erfindung betrifft eine Einrichtung (1) zum Schließen von Spanngurten (2) zum Befestigen und Spannen eines Spanngurtbandes (3), welches mit einem Ende um einen Körper geschlungen und in einen Spanner (4) eingeführt und dort auf eine Welle (5) gewickelt wird, wobei die Welle (5) des Spanners (4) mittels eines Spannhebels (6) in eine Drehrichtung drehbar ist, so dass das Spanngurtband (3) mit einer Zugspannung beaufschlagt wird und an dem Spannhebel (6) eine quer zu seiner Längsrichtung ausgerichtete, schlitzartige Ausnehmung (6a) vorgesehen ist, durch welche das Spanngurtband (3) geführt ist. Die Einrichtung (1) ist dadurch gekennzeichnet, dass sie ein Griffteil (10) umfasst, an welchem zumindest ein der schlitzartigen Ausnehmung (6a) angepasstes, flächig ausgebildetes Hebelelement (11) vorgesehen ist, das zumindest einen quer zur Längsrichtung der Einrichtung (1) ausgerichteten Anschlag (11a) aufweist, welcher als Auflager des Hebelelements (11) fungiert, mittels dem der Spannhebel (6) in eine geschlossene Position gehebelt werden kann.

## Beschreibung

### Technisches Gebiet

Die vorliegende Erfindung betrifft eine Einrichtung zum Schließen von Spanngurten zum Befestigen und Spannen eines Spanngurtbandes.

### Stand der Technik

Spanngurte werden in der Regel bei der Sicherung von Ladungen bspw. an LKWs verwendet. Hierbei wird ein Spanngurtband mit einem Ende um einen Körper geschlungen und in einen Spanner eingeführt und dort auf eine Welle gewickelt. Mittels eines Spannhebels ist die Welle des Spanners in eine Drehrichtung drehbar, so dass das Spanngurtband mit einer Zugspannung beaufschlagt wird. Das in das Spannschloss eingespannte Spanngurtband kann auf diese Weise durch eine mehrmalige Schwenkbewegung des Spannhebels gespannt werden. Der Spanner verbleibt in dieser geschlossenen Stellung, bis der Spannhebel wieder gelöst werden soll.

Freie Spanngurte weisen zum leichteren Schließen des Spanngurtes teilweise einen verlängerten Spannhebel auf, der sich zur leichteren Handhabung in Richtung seines äußeren Endes zusätzlich verbreitert. Bei ortfesten Spannern, wie sie bspw. bei LKWs Verwendung finden, sind die Spannhebel dagegen unhandlich ausgestaltet; teilweise derart, dass ein Schließen des Spanners nur mit erheblichem Kraftaufwand erfolgt, wobei Hände und Finger aufgrund der geringen Auflagefläche an dem Spannhebel in Mitleidenschaft gezogen werden.

### Darstellung der Erfindung

Der vorliegenden Erfindung liegt die Aufgabe zu Grunde, eine Einrichtung zu schaffen, welche die vorgenannten Nachteile ausräumt und welche geeignet ist, ein leichtes und verletzungsfreies Schließen des Spannhebels zu gewährleisten.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Einrichtung sind in den abhängigen Unteransprüchen angegeben.

Die vorliegende Erfindung schließt die technische Lehre ein, dass an dem Spannhebel eine quer zu seiner Längsrichtung ausgerichtete schlitzartige Ausnehmung (Öffnung) vorgesehen ist, durch welche das Spanngurtband geführt ist.

Erfindungsgemäß ist eine Einrichtung der eingangs genannten Art dadurch gekennzeichnet, dass sie ein Griffteil umfasst, an welchem zumindest ein der schlitzartigen Ausnehmung am Spannhebel angepasstes, flächig ausgebildetes Hebelelement vorgesehen ist, das zumindest einen quer zur Längsrichtung der Einrichtung ausgerichteten Anschlag aufweist, welcher als Auflager des Hebelelements fungiert, mittels dem der Spannhebel in eine geschlossene Position gehebelt werden kann. Als Auflager sei nachstehend der Drehpunkt des Hebelelements verstanden.

### Kurzbeschreibung der Zeichnungen

Weitere Ziele, Merkmale, Vorteile und Anwendungsmöglichkeiten der erfindungsgemäßen Einrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 die Einrichtung an einem Spanner in der Seitenansicht;
Fig.2 die Einrichtung an einem Spanner in der Frontansicht.

### Ausführung der Erfindung

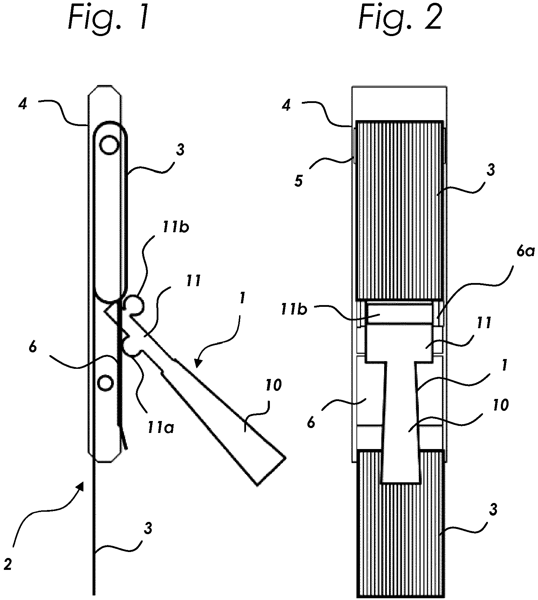

Wie aus den Fign.1 und 2 ersichtlich, umfasst die Einrichtung 1 ein Griffteil 10, an welchem zumindest ein derschtitzartigen Ausnehmung 6a angepasstes, flächig ausgebildetes Hebelelement 11 vorgesehen ist. Das Hebelelement 11 weist ferner zumindest einen quer zur Längsrichtung der Einrichtung 1 ausgerichteten Anschlag 12a auf, welcher als Auflager des Hebelelements 11 fungiert, mittels dem der Spannhebel 6 in eine geschlossene Position gehebelt werden kann.

In der in den Fign. 1 und 2 dargestellten Ausführung sind an dem Hebelelement 11 beidseitig versetzt angeordnete Anschläge 11a, 11b vorgesehen, welche ein Schließen (bzw. Verriegeln) des Spannhebels 6 ermöglichen. Der Anschlag 11b verhindert dabei ein unbeabsichtigtes Hineingleiten des Hebelelements 11 in die Ausnehmung 6a und liegt hierzu an dem Spannhebel 6 oberhalb der Ausnehmung 11b an.

In der in den Fign. 1 und 2 dargestellten Ausführung ist ein nach dem Stand der Technik bekannter Spanner 4 dargestellt. Dieser umfasst ein Spanngurtband 3, welches mit einem Ende um einen Körper geschlungen und in den Spanner 4 eingeführt werden kann, um dort auf eine Welle 5 gewickelt zu werden. Die Welle 5 des Spanners 4 wird mittels des Spannhebels 6 in eine Drehrichtung gedreht, so dass das Spanngurtband 3 mit einer Zugspannung beaufschlagt wird. Der Spannhebel 6 weist eine quer zu seiner Längsrichtung ausgerichtete, schlitzartige Ausnehmung 6a auf, durch welche das Spanngurtband 3 geführt ist, und mittels der der Spannhebel mit der erfindungsgemäßen Einrichtung 1 in eine geschlossene Position gehebelt werden kann.

Griffteil 10 und Hebelelement 11 der Einrichtung 1 können aus einem oder mehreren Formteilen gebildet sein, die wiederum aus demselben oder unterschiedlichen Werkstoffen hergestellt sind.

Das Griffteil 10 besteht vorzugsweise aus einem festen und unbiegsamen Material, vorzugsweise aus Metall oder einem harten Kunststoff. Das Griffteil 10 sollte vorteilhafterweise möglichst ergonomisch und handlich ausgestaltet sein und kann besonders bevorzugt mit einer elastischen und/oder griffigen Hülle umfasst werden, bspw. einer Gummihülle, einer Schaumstoffummantelung oder ähnlichem.

Das Hebelelement 11 erfordert eine hohe Festigkeit, da es beim Hebeln des Spannhebels 6 zumindest bereichsweise hohen Kräften ausgesetzt ist. Hier eignet sich in erster Linie Metall. Die an dem Hebelelement 11 vorgesehenen Anschläge sind - wie aus den Fign. 1 und 2 ersichtlich - vorzugsweise abgerundet ausgebildet. Dies hat den Vorteil, dass sie das Spanngurtband 3 beim Hebeln nicht beschädigen.

Die erfindungsgemäße Einrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Einrichtung
- 2: Spanngurt
- 3: Spanngurtband
- 4: Spanner
- 5: Welle
- 6: Spannhebel
- 6a: Ausnehmung am Spannhebel
- 10: Griffteil
- 11: Hebelelement
- 11a: Anschlag am Hebelelement (Auflager / Drehpunkt)
- 11b: Anschlag am Hebelelement

## Patentansprüche

1. Einrichtung (1) zum Schließen von Spanngurten (2) zum Befestigen und Spannen eines Spanngurtbandes (3), welches mit einem Ende um einen Körper geschlungen und in einen Spanner (4) eingeführt und dort auf eine Welle (5) gewickelt wird, wobei die Welle (5) des Spanners (4) mittels eines Spannhebels (6) in eine Drehrichtung drehbar ist, so dass das Spanngurtband (3) mit einer Zugspannung beaufschlagt wird und an dem Spannhebel (6) eine quer zu seiner Längsrichtung ausgerichtete, schlitzartige Ausnehmung (6a) vorgesehen ist, durch welche das Spanngurtband (3) geführt ist,
**dadurch gekennzeichnet, dass**
die Einrichtung (1) ein Griffteil (10) umfasst, an welchem zumindest ein der schlitzartigen Ausnehmung (6a) angepasstes, flächig ausgebildetes Hebelelement (11) vorgesehen ist, das zumindest einen quer zur Längsrichtung der Einrichtung (1) ausgerichteten Anschlag (11a) aufweist, welcher als Auflager des Hebelelements (11) fungiert, mittels dem der Spannhebel (6) in eine geschlossene Position gehebelt werden kann.

2. Einrichtung nach Anspruch 1,
**dadurch gekennzeichnet,**
**dass** an dem Hebelelement (11) mindestens zwei beidseitig versetzt angeordnete Anschläge (11a,11b) vorgesehen sind, wobei der Anschlag (11b) ein unbeabsichtigtes Hineingleiten des Hebelelements (11) in die Ausnehmung (6a) verhindert.
